# EUROPÄISCHE PATENTSCHRIFT

(11) **EP 2 125 410 B1**
(45) Veröffentlichungstag und Bekanntmachung des Hinweises auf die Patenterteilung: **29.07.2015**
(21) Anmeldenummer: 08706800.3
(22) Anmeldetag: 25.01.2008
(51) Int. Cl.: B60J 7/05, B60J 7/19, B60J 10/12, B60J 7/043

(54) **FAHRZEUGDACH**
VEHICLE ROOF
TOIT DE VÉHICULE

(30) Priorität: 25.01.2007 DE 102007003866; 02.04.2007 DE 102007015709
(43) Veröffentlichungstag der Anmeldung: 02.12.2009
(73) Patentinhaber: Webasto AG, 82131 Stockdorf (DE)
(72) Erfinder: BERGMILLER, Alexander, 86343 Koenigsbrunn (DE); SEIFERT, Wolfgang, 82407 Wielenbach (DE); SKORIANZ, Gerhard, 82216 Maisach (DE); HOFMANN, Dirk, 81927 München (DE); Elbs, Norbert, 80797 München (DE)
(74) Vertreter: Schwan Schorer & Partner mbB
(86) Internationale Anmeldenummer: PCT/DE2008/000132
(87) Internationale Veröffentlichungsnummer: WO 2008/089745

(56) Entgegenhaltungen:
- EP-A- 0 106 610
- EP-A1- 0 908 342
- DE-A1- 19 512 342
- DE-C1- 3 818 476
- DE-C1- 3 840 491
- DE-U1-202007 012 126
- JP-A- 62 265 020

## Beschreibung

Die vorliegende Erfindung betrifft ein Fahrzeugdach gemäß dem Oberbegriff von Anspruch 1.

Gattungsgemäße Fahrzeugdächer sind aus dem Stand der Technik bekannt. So zeigen die EP 0 106 610 A und die DE 38 40 491 C1 jeweils ein Fahrzeugdach gemäß dem Oberbegriff von Anspruch 1. Die DE 195 12 342 A1 beschreibt beispielsweise ein Fahrzeugdach mit einer festen Dachaußenhaut, in der eine Dachöffnung angeordnet ist, welche mit einem Deckel verschlossen werden kann. Der Deckel kann an seiner Hinterkante nach oben ausgestellt werden bzw. alternativ nach hinten verlagert werden, um die Dachöffnung frei zu geben. Im geschlossenen Zustand der Dachöffnung liegt der Deckel an seiner Vorderkante und seiner Hinterkante unterhalb der festen Dachhaut an, wodurch er auf zwei gegenüber liegenden Seiten formschlüssig an einem ungewollten Durchtreten durch die Dachöffnung nach oben gehindert wird.

Es ist Aufgabe der vorliegenden Erfindung, ein Fahrzeugdach zu schaffen mit einer Öffnung, welche durch einen Deckel verschlossen werden kann, wobei der Deckel einerseits gegen ein ungewolltes Durchtreten durch die Dachöffnung nach außen gesichert ist, andererseits jedoch die zum Öffnen der Dachöffnung notwendige Bewegung des Deckels gegenüber den Lösungen des Standes der Technik vereinfacht wird.

Diese Aufgabe wird durch ein Fahrzeugdach gemäß dem Anspruch 1 gelöst.

Erfindungsgemäß ist der Deckel an seiner Hinterkante nach oben ausstellbar und wird das Abstützelement durch eine Vorderkante der Dachöffnung ausgebildet, wobei die Vorderkante durch einen Rand in der Außenhaut ausgebildet wird, und der Deckel eine transparente Scheibe aufweist, wobei die Scheibe eine Randumschäumung aufweist und die Verriegelungsnase an die Randumschäumung angeformt ist.

Weitere bevorzugte Ausführungsformen der Erfindung ergeben sich aus den Unteransprüchen.

Bei einer bevorzugten Ausführungsform der Erfindung ist der Deckel zur Verlagerung in Fahrzeuglängsrichtung absenkbar oder anhebbar gelagert, um ihn oberhalb oder unterhalb der festen Dachaußenhaut des Fahrzeugs zu führen.

Unter dem Begriff Vorderkante der Dachöffnung ist dabei der Rand der Dachöffnung zu verstehen, welcher aufgrund seiner Stabilität geeignet ist, die typischen Kräfte, die aufgrund einer Windlast oder eine Rüttelbewegung auf den Deckel wirken, aufzunehmen. Es kann sich dabei um einen Rand in der Außenhaut des Dachausschnitts handeln, oder um ein an einem solchen Rand angebrachtes Anbauteil wie z.B. eine Dichtung, sofern diese entsprechend verstärkt ist. Eine solche Dichtung kann beispielsweise als Hohlkammerdichtung ausgebildet sein, was zu einer besonders guten Dichtwirkung führt. Weiterhin kann bei einer besonders bevorzugten Ausführungsform der Erfindung eine solche Dichtung in einen weicheren und einen härteren Bereich aufgeteilt sein, wobei durch den härteren Bereich ein Abstützen der Verriegelungsnase an der Vorderkante der Dachöffnung durch einen besseren Kraftschluss unterstützt wird, während der weichere Bereich das Dichtverhalten der Dichtung verbessert. Der härtere Bereich der Dichtung kann dabei auch die eigentliche Vorderkante der Dachöffnung ausbilden, an der allein sich die Verriegelungsnase zur Verriegelung abstützt. Der härtere Bereich kann vorzugsweise durch eine Verstärkungseinlage innerhalb des weicheren Bereichs ausgeführt sein. Bei einer besonders bevorzugten Ausführungsform der Erfindung ist der härtere Bereich innerhalb einer Hohlkammer der Dichtung angeordnet und kann beispielsweise durch eine durchgehende Schnur oder durch einzelne Schnurabschnitte gebildet sein. Eine solche Dichtung kann auch als Verriegelungsnase im Bereich der Deckelvorderkante angebracht sein, wobei der entsprechende härtere Bereich die Verriegelungsnasenfunktion übernimmt. Weiter alternativ kann eine Dichtung an Randbereichen des Deckels zusätzlich zu einer Verriegelungsnase am Deckel angebracht sein. Bei diesen beiden Ausführungsformen der Erfindung mit Dichtungen am Deckel kann auf eine Gegendichtung am Rand des Dachausschnitts verzichtet werden, jedoch kann am Rand des Dachauschnitts ein Dämpfungselement angebracht sein, um die Aufsetzbewegung einer Verriegelungsnase am Dach abzudämpfen.

Bei weiteren bevorzugten Ausführungsformen der Erfindung weist die Dachhaut in einem Bereich der Vorderkante der Dachöffnung eine im wesentlichen rechtwinklige erste Biegung nach unten auf, an die sich ein im wesentlichen senkrechter Abschnitt der Dachhaut anschließt, wobei die Dichtung an diesem senkrechten Abschnitt auf der der Dachöffnung zugeordneten Seite befestigt sein kann. Dies bietet neben der Befestigungsfläche für die Dichtung auch eine Verstärkung der Vorderkante der Dachöffnung. Um den Rand der Dachöffnung weiter zu verstärken, kann in diesen im Wesentlichen senkrechten Abschnitt die Dachhaut zusätzlich umgefalzt sein. Unter einer solchen Umfalzung wird verstanden, dass das freie Ende der Dachhaut um ca. 180° umgeknickt wird. Eine in diesem Bereich angebrachte Dichtung kann dabei vorzugsweise einen Fortsatz mit einer Nut aufweisen, in die der umgefalzte Bereich eingreift. Dadurch kann die Dichtung auf den Falzbereich der Kante der Dachöffnung aufgesteckt werden, wodurch sich eine alternative oder zusätzliche Fixierung der Dichtung an der Dachhaut ergibt.

Bei einer weiteren bevorzugten Ausführungsform der Erfindung ist in einem Bereich der Vorderkante der Dachöffnung die Dachhaut mit einer Kröpfung nach innen versehen. Dies bedeutet, dass die Dachhaut in einer ersten, vorzugsweise im Wesentlichen rechtwinkligen Biegung nach unten (in Richtung Fahrzeuginnenraum) und anschließend mittels einer zweiten Biegung wieder in die Horizontale geführt ist, wo sie die Dachöffnung begrenzt. Auch hier kann die Dichtung wiederum eine Nut aufweisen, welche hier entsprechend horizontal ausgeführt ist und in die das freie Ende der Dachhaut eingreift.

Bei Ausführungsformen mit einer Dichtung an der Vorderkante der Dachöffnung untergreift vorzugsweise die Verriegelungsnase die Dichtung in der Schließstellung mindestens teilweise. Dabei kann in der Schließstellung die Verriegelungsnase kraftschlüssig an der Dichtung anliegen, um eine Verlagerung des Deckels nach außen zu verhindern. Alternativ können aber Dichtung und Verriegelungsnase in der Schließstellung des Deckels einen Abstand zueinander aufweisen, sodass ein Kraftschluss erst ab einer gewissen Verlagerung des Deckels nach außen stattfindet. Dadurch wird einerseits eine Verlagerung des Deckels nach außen ab einer gewissen Auslenkung unterbunden und andererseits eine erwünschte horizontale Verlagerung des Deckels zur Freigabe der Dachöffnung erleichtert, da ohne eine äußere Kraftwirkung Verriegelungsnase und Dichtung getrennt sind, was Reibung und Verschleiß von Dichtung und Verriegelungsnase reduziert.

Zur Verstärkung der Deckelkonstruktion kann die Randumschäumung eine Verstärkungseinlage aufweisen, welches vorzugsweise beim Anschäumen der Randumschäumung an den Deckel in die Randumschäumung eingeschäumt wird. Um die Stabilität der Verriegelungsnase zu verbessern, kann dabei bei einer besonders bevorzugten Ausführungsform der Erfindung die Verstärkungseinalge zumindest teilweise in die Verriegelungsnase hinein ragen.

Bei einer bevorzugten Ausführungsform der Erfindung ist ein Deckelrandbereich in Richtung Fahrzeuginnenraum gekröpft ausgebildet, und formt so die Verriegelungsnase.

Statt einer Verriegelungsnase mit einem gekröpften Verlauf kann bei jeder der besprochenen Ausführungsformen der Erfindung die Verriegelungsnase auch einen schrägen Fortsatz des Deckelrandbereichs in Richtung Fahrzeuginnenraum und zur Vorderkante der Dachöffnung hin bilden.

Im Folgenden wird die Erfindung anhand der beigefügten Zeichnungen beispielhaft näher erläutert. Dabei zeigen:
- FIG. 1a: eine perspektivische Ansicht von oben auf einen Deckel eines erfindungsgemäßen Fahrzeugdachs mit drei Verriegelungsnasen an einer Deckelvorderkante;
- FIG. 1b: eine Ansicht von oben auf eine alternative Ausführungsform eines erfindungsgemäßen Deckels für ein Fahrzeugdach mit einer durchgehenden Verriegelungsnase an einer Deckelvorderkante;
- FIG. 2a bis 2d: Querschnittsansichten von alternativen Ausführungsformen erfindungsgemäßer Deckel, wobei der Querschnitt entlang der Linie II-II der FIG. 1b verläuft;
- FIG. 3a und 3b: alternative Verschiebewege zum Öffnen bzw. Verschließen eines erfindungsgemäßen Fahrzeugdachs;
- FIG. 4a bis 4e: verschiedene alternative Ausführungsformen von Dichtungen und Vorderkanten einer Dachöffnung eines erfindungsgemäßen Fahrzeugdachs; und
- Fig. 5: eine Ausführungsform eines Fahrzeugdachs mit einem Hakenelement zur Verriegelung des Deckels an seiner Vorderkante für die kein Schutz begehrt wird.

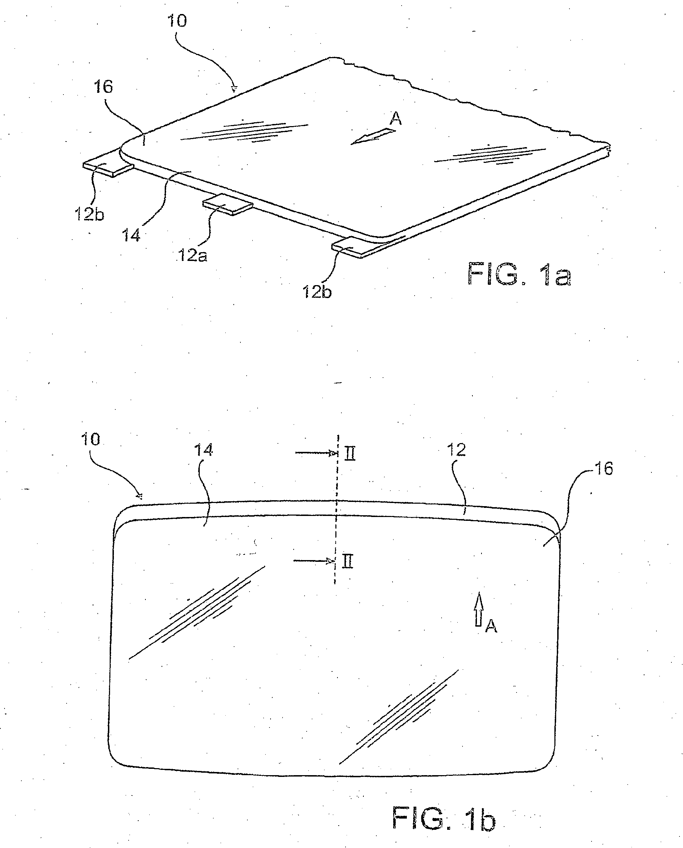

FIG. 1 zeigt einen Deckel 10 eines erfindungsgemäßen Fahrzeugdachs in einer perspektivischen Ansicht von oben. Der Deckel kann in einer hier nicht gezeigten Dachöffnung entlang einer Richtung A verlagert werden, um die Dachöffnung zu verschließen. Im Bereich einer Deckelvorderkante 14 des Deckels 10 weist der Deckel drei Verriegelungsnasen 12a, 12b auf, mittels derer der Deckel in einer Schließstellung durch ein Untergreifen unter eine Vorderkante der Dachöffnung gegen ein Abheben gesichert wird. Die Verriegelungsnasen können dabei direkt an der Deckelvorderkante 14 angeordnet sein, wie dies hier für Verriegelungsnase 12a dargestellt ist. Die Verriegelungsnasen können sich aber auch bis in einen Eckbereich 16 des Deckels 10 hineinziehen, wie dies hier für die Verriegelungsnase 12b dargestellt ist, um eine möglichst gute Verriegelung des Deckels in der Schließstellung zu erreichen. Wichtig ist dabei, dass der Deckel in seinen Seitenbereichen sowie an der Hinterkante frei von Verriegelungsnasen ist, sodass er um eine Achse, welche näherungsweise entlang der Deckelvorderkante 14 verläuft, leicht nach oben ausgestellt werden kann. Die Ausführungform des Deckels 10 mit drei Verriegelungsnasen 12a, 12b soll dabei lediglich beispielhaft verstanden werden. Natürlich können auch mehr als drei Verriegelungsnasen eingesetzt werden. Alternativ kann, wie in FIG. 1b dargestellt, ein Deckel 10 auch nur eine durchgehende Verriegelungsnase 12 entlang einer Deckelvorderkante 14 aufweisen.

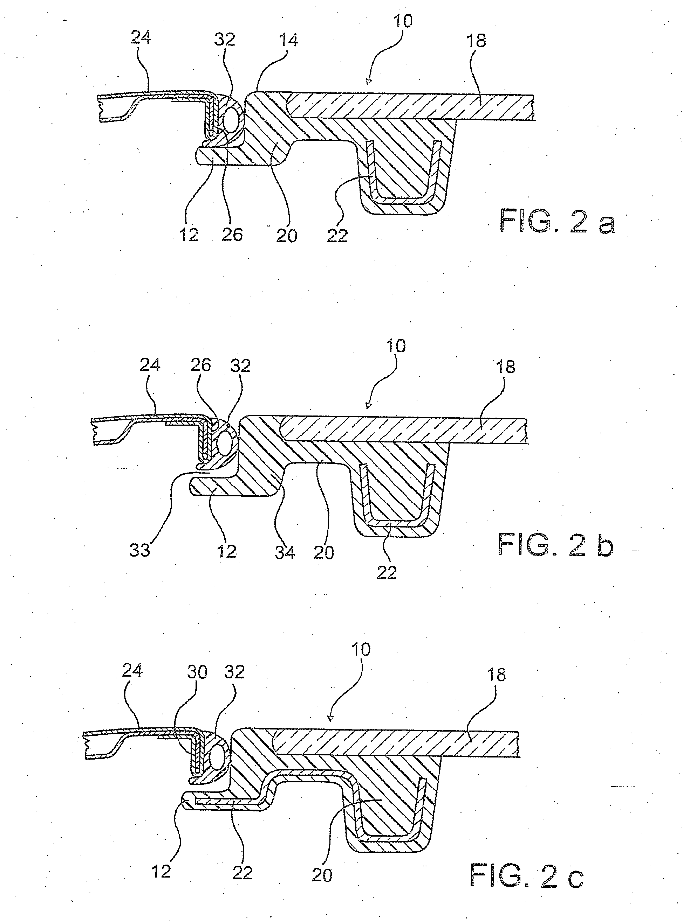

FIG. 2a zeigt eine Querschnittsansicht entlang der Linie II-II der FIG. 1b durch eine Deckelvorderkante 14 bzw. durch einen angrenzenden Abschnitt einer Dachhaut 24. Der Deckel 14 weist eine transparente Glasscheibe 18 auf, welche mit einer Randumschäumung 20 versehen ist, die durch eine Verstärkungseinlage 22 verstärkt ist. An der Dachhaut 24 ist in einem senkrechten Abschnitt 26 der Dachhaut, welche hier durch eine Biegung nach unten, (zu einem Fahrzeuginnenraum hin) geführt ist, eine Dichtung 32 angeordnet, welche als Hohlkammerdichtung ausgeführt ist. Eine Verriegelungsnase 12, welche an die Randumschäumung 20 angeformt ist, ist als eine gekröpfte Fortsetzung der Randumschäumung so ausgeführt, dass sie in der dargestellten Schließstellung des Deckels 10 die Dichtung 32 und den senkrechten Abschnitt 26 der Dachhaut 24 untergreift und sich kraftschlüssig an der Dichtung bzw. der Dachhaut abstützt. Dadurch wird vermieden, dass der Deckel 10 durch eine Rüttelbewegung oder durch eine Sogwirkung des anströmenden Fahrtwinds nach außen verlagert wird. Entsprechend wird eine (hier nicht dargestellte) Deckelmechanik von solchen Kräften im Bereich der Deckelvorderkante entlastet und die Anforderungen an die Stabilität der Deckelmechanik sind entsprechend geringer.

In der FIG. 2b ist ein Fahrzeugdach in einer zur FIG. 2a alternativen Ausführungsform abgebildet. Der wesentliche Unterschied zur Ausführungsform der FIG. 2a besteht darin, dass die Verriegelungsnase 12 eine stärkere Kröpfung 34 in Richtung Fahrzeuginnenraum aufweist, wodurch in einer Schließstellung des Deckels 10 sich ein Abstand 33 der Verriegelungsnase 12 zur Dichtung 32 bzw. zum senkrechten Abschnitt 26 der Dachhaut 24 einstellt. Durch diesen Abstand 33 ist einerseits gewährleistet, dass die Bewegung des Deckels zur Freigabe der Dachöffnung erleichtert wird, da bei einer Verschiebung des Deckels 10 im Bild nach rechts keine Reibung zwischen der Verriegelungsnase 12 und der Dichtung 32 auftritt. Andererseits wird der Abstand 33 bei einer äußeren Kraft des Deckels in Bildrichtung nach oben soweit verringert, dass ab einer bestimmten Auslenkung die Verriegelungsnase 12 in Kraftschluss mit der Dichtung 32 bzw. der Dachhaut 24 tritt und ab diesem Punkt eine weitere Verlagerung des Deckels 10 nach außen unterbunden wird.

In einer alternativen Ausführungsform der Erfindung gemäß der FIG. 2c weist ein Deckel 10 ebenfalls eine Randumschäumung 20 einer transparenten Glasscheibe 18 auf, wobei auch hier die Randumschäumung durch eine Verstärkungseinlage 22 beispielsweise aus Metall verstärkt ist. Im Unterschied zu der Ausführungsform der FIG. 2b dehnt sich jedoch hier die Verstärkungseinlage 22 bis in den Bereich der Verriegelungsnase 12 hinein aus. Somit ist gewährleistet, dass auch die Verriegelungsnase 12 durch die Verstärkungseinlage 22 verstärkt ist, wodurch sie sich bei einer Krafteinwirkung auf den Deckel nach außen (in Bildrichtung nach oben) wesentlich steifer gegen eine Dichtung 32 und / oder einen Falz 30 der Dachhaut 24 abstützen kann.

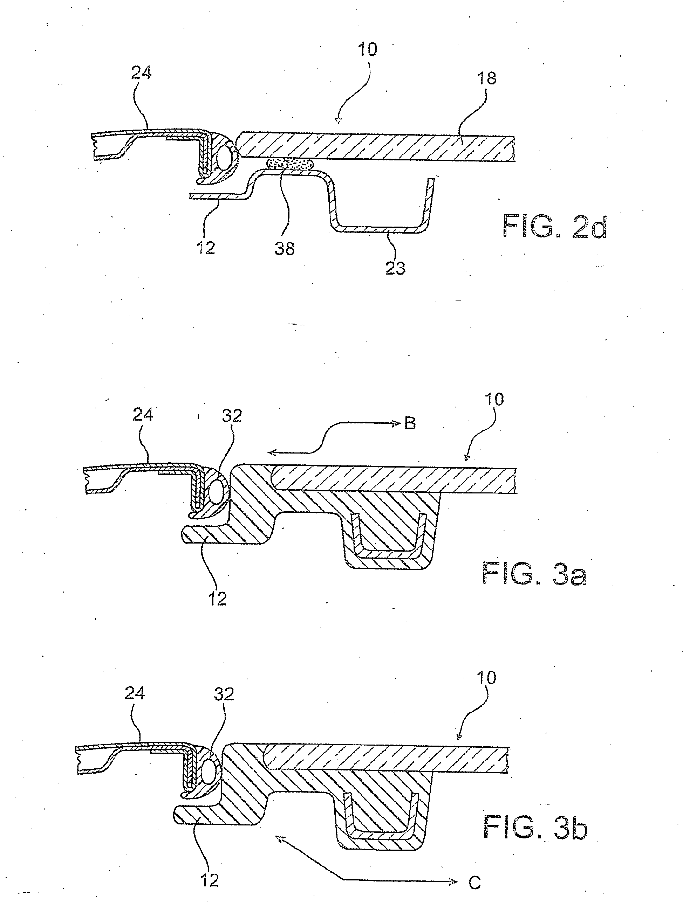

In der FIG. 2d ist ein Deckel 10 eines Fahrzeugdachs dargestellt, der ebenfalls eine Glasscheibe 18 (wie bei den Ausführungsformen der Figuren 2a bis 2c) aufweist, jedoch keine Randumschäumung. Für ein solches Dach wird kein Schutz begehrt. In diesem Fall ist zur Verstärkung der Glasscheibe 18 ein Verstärkungselement 23 direkt an der Glasscheibe 18 mittels einer Klebeverbindung 38 angebracht. Bei dieser Ausführungsform der Erfindung wird eine Verriegelungsnase 12 direkt und allein durch das Verstärkungselement 23 gebildet. Die FIG. 3a und 3b zeigen alternative Verschiebewege B und C einer Deckels 10 zum Freigeben einer Dachöffnung in einer Dachhaut 24. Bei der Verschiebung des Deckels 10 gemäß der Linie B in der FIG. 3a wird der Deckel zunächst mit seiner Hinterkante über die feste Dachhaut ausgestellt und dann nach hinten verfahren, bis die Verriegelungsnase 12 nicht mehr die Dachhaut 24 bzw. eine an ihr angeordnete Dichtung 32 untergreift. Anschließend wird der Deckel 10 nach oben aus der Dachöffnung herausgehoben, um ihn weiterhin entgegen der Fahrtrichtung nach hinten (im Bild nach rechts) zu verlagern. Eine solche kinematische Bewegung kommt beispielsweise bei einem Ausstellschiebedach oder einem außengeführten Schiebedach zum Einsatz.

Im Gegensatz hierzu wird der Deckel der FIG. 3b zur Öffnung des Fahrzeugdachs zunächst zum Fahrzeuginnenraum hin nach unten (im Bild nach unten) und anschließend entgegen der Fahrtrichtung nach hinten (im Bild nach rechts) verlagert. Ein solches Absenken des Deckels zur Freigeben der Öffnung in der Dachhaut 24 kann beispielsweise bei einem Schiebe-Hebedach verwendet werden.

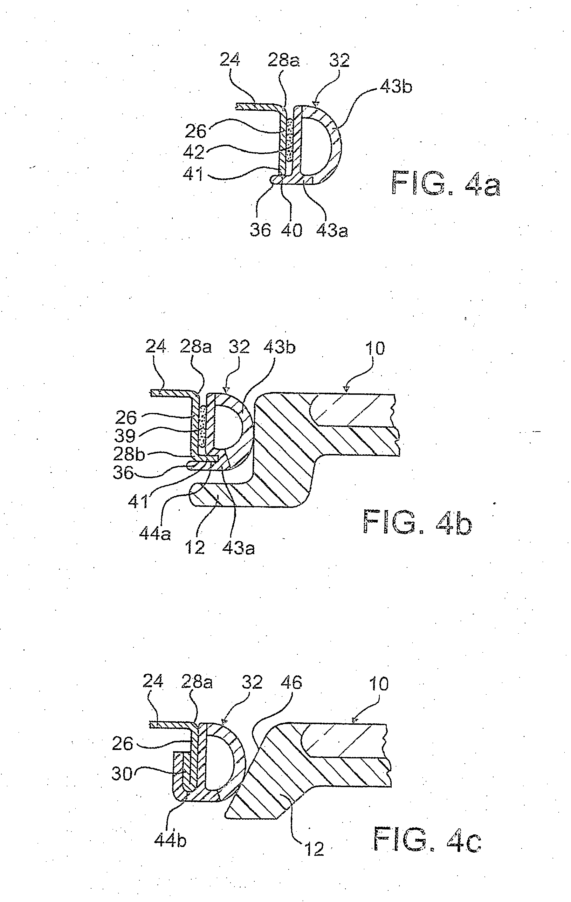

Verschiedene Ausführungsformen von Dichtungen 32 zum Einsatz an einer Vorderkante einer Öffnung in einer Dachhaut 24, an der sich der Deckel mit seiner bzw. seinen Verriegelungsnasen abstützt, sind in den Figuren 4a bis 4e dargestellt.

In der Ausführungsform der FIG. 4a ist die Dachhaut 24 durch eine erste Krümmung 28a nach unten zum Fahrzeuginnenraum hin umgebogen und bildet somit einen senkrechten Abschnitt 26, an welchem eine Dichtung 32 mittels einer Klebeverbindung 42 befestigt ist. Die Dichtung 32 weist dabei einen härteren Bereich 43a und einen weicheren Bereich 43b auf. Beispielsweise können hierzu unterschiedlich weiche Materialen zu einer Dichtung gespritzt, geschäumt oder extrudiert werden. Der härtere Bereich 43a dient dazu, einen besseren Kraftschluss einer hier nicht dargestellten Verriegelungsnase von unten her gegen die Dichtung zu gewährleisten. Der weiche Bereich 43b verbessert die Dichtwirkung der Dichtung 32 gegenüber einem hier nicht dargestellten Deckel, der in einer Schließstellung von rechts gegen die Dichtung 32 drückt. Die Dichtung 32 weist weiterhin einen Fortsatz 36 auf, mit welchem sie an einer Stirnfläche 40 des senkrechten Abschnitts 26 der Dachhaut 24 anliegt, und sich gegen diesen abstützt. Dieser Fortsatz 36 ist durch den härteren Bereich 43a der Dichtung 32 gebildet und dient durch seine Abstützung gegenüber der Stirnfläche 40 einem weiter verbesserten vertikalen Kraftschlussverhalten der Dichtung 32 mit einer von unten anliegenden, die Dichtung untergreifenden Verriegelungsnase.

FIG. 4b zeigt eine alternative Ausführungsform der Erfindung, bei der wie in der FIG. 4a eine Dachhaut ebenfalls einen ersten senkrechten Abschnitt 26 aufweist, da auch hier die Dachhaut 24 über eine erste Krümmung 28a aus ihrer horizontalen Anordnung um ca. 90° zum Fahrzeuginnenraum hin nach unten gebogen ist. Im Gegensatz zu der Ausführungsform der FIG. 4a weist hier die Dachhaut 24 im Anschluss an den senkrechten Bereich 26 jedoch eine zweite Krümmung 28b auf, welche die Dachhaut 24 wieder in eine horizontale Ausrichtung bringt. Es entsteht somit eine Art Kröpfung der Dachhaut 24 in Richtung Fahrzeuginnenraum (im Bild nach unten). Ähnlich wie in der FIG. 4a ist auch hier eine Dichtung 32 am senkrechten Abschnitt 26 der Dachhaut 24 angeordnet und mittels einer Klebeverbindung 39 befestigt. Allerdings weist die Dichtung 32 hier einen Fortsatz 36 mit einer im Wesentlichen horizontalen Nut 44a auf, in die ein im Wesentlichen horizontales freies Ende 41 der Dachhaut 24 eingreift. Somit ist zusätzlich zur Klebeverbindung 39 durch die formschlüssige Verbindung zwischen dem freien Ende 41 der Dachhaut 24 und der Nut 44a der Dichtung 32 ein weiterer Befestigungspunkt der Dichtung an der Dachhaut zur Verfügung gestellt. Auch die gekröpfte Ausführung des Randes der Dachhaut 24 verbessert durch eine resultierende Versteifung den Kraftschluss der Dichtung 32 gegenüber einer Verriegelungsnase 12 eines Deckels 10 bei äußeren Kräften in Bildrichtung nach oben. Dieses Abstützverhalten sowie das Dichtverhalten wird auch hier zusätzlich durch die Unterteilung der Dichtung 32 in einen härteren Bereich 43a und einen weicheren Bereich 43b verbessert.

Eine weitere alternative Ausführungsform der Erfindung ist in der FIG. 4c in einer zu den FIG. 4a und 4b ähnlichen Querschnittsansicht dargestellt. Der Unterschied zu den FIG. 4a und 4b besteht einerseits in der Ausführung des Randes der Dachhaut 24, welche hier nach einer ersten Krümmung 28a, durch die die Dachhaut im wesentlichen senkrecht zum Fahrzeuginnenraum geführt ist (im Bild nach unten), einen Falz 30 bildet, in den das Ende der Dachhaut 24 nach innen umgeschlagen ist. Auf diesen Falz 30 ist wiederum eine Dichtung 32 mittels einer hier senkrecht ausgebildeten Nut 44b aufgesteckt. Die Befestigung der Dichtung 32 kann dabei entweder lediglich durch das Aufstecken in die Nut 44b erfolgen oder zusätzlich (hier nicht dargestellt) durch eine Klebeverbindung in einem senkrechten Bereich 26 der Dachhaut 24. Der hier dargestellte Deckel 10 weist wie der Deckel der FIG. 4b eine Verriegelungsnase 12 auf, welche jedoch statt der kröpfungsartigen Ausführung der FIG. 4b eine rampenförmige Abschrägung 46 aufweist, mittels derer sie in einer Schließstellung des Deckels sich gegen die Dichtung 32 abstützt und diese untergreift.

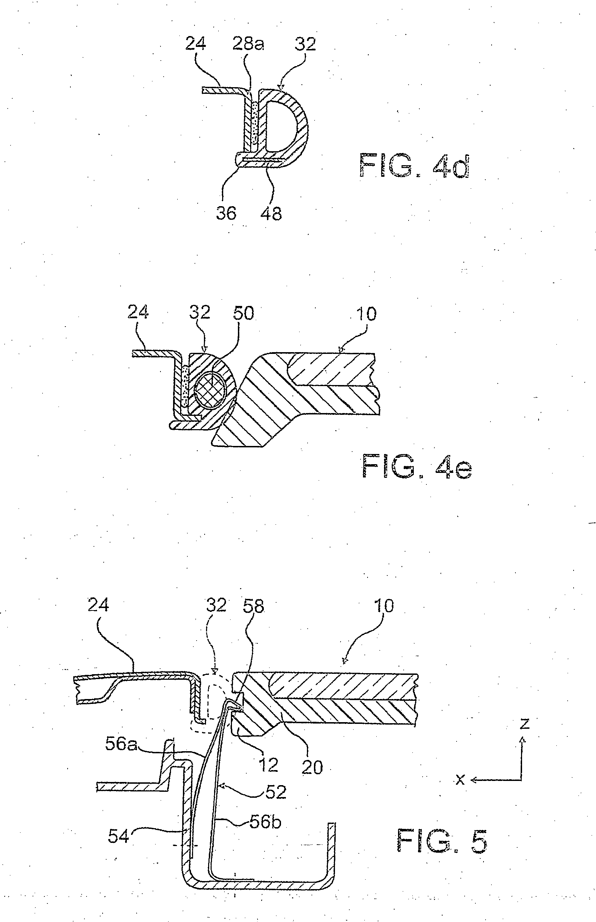

FIG. 4d zeigt eine Ausführungsform der Erfindung bei der alternativ zu der Ausführungsform der FIG. 4a eine Dichtung 32 als einen härteren Bereich eine Verstärkungseinlage 48 aufweist, welche in die Dichtung 32 beispielsweise eingeschäumt sein kann. Auch hier dient der härtere Bereich in Form der Verstärkungseinlage 41 einer Verbesserung des Abstützverhaltens der Dichtung 32 in einer Richtung senkrecht aus der Dachöffnung heraus (im Bild nach oben).

Alternativ zu der Verstärkungseinlage 48, die beispielsweise als Metalleinleger ausgeführt sein kann, kann bei Verwendung einer Hohlkammerdichtung eine Schnur 50 in die Hohlkammer der Dichtung 32 eingefügt sein, wie dies in FIG. 4e dargestellt ist. Dabei kann sich die Schnur 50 entlang der gesamten Länge der Dichtung 32 erstrecken oder aber auch nur in gewisse Abschnitte der Dichtung 32 (insbesondere in Bereichen mit zugeordneten Verriegelungsnasen) eingelegt sein. Auch hier dient die Schnur 50 als Versteifungselement der Dichtung 32.

Bei allen Ausführungsformen der Figuren können die Verriegelungsnasen 12a, b und/oder die Dichtung 32 reibungsmindemd beschichtet sein. Eine solche Beschichtung kann beispielsweise aus einer Beflockung oder einem Gleitlack bestehen und dient neben der Verringerung der Reibung auch einer Vermeidung von Geräuschen bei einer Verlagerung des Deckels 10 relativ zur Dichtung 32.

Eine Ausführungsform eines Fahrzeugdachs, für welches kein Schutz begehrt wird, ist in Fig. 5 gezeigt. Ein Hakenelement 52 mit einer leicht nach unten geneigten Nase 58 ist aus einem Metallblech geformt und bildet eine Klammer, welche mittels zweier Befestigungsfortsätze 56a, b an einem Dachrahmen 54 dachfest befestigt (z.B. angeschweißt, vernietet oder verschraubt) ist. Alternativ kann das Hakenelement auch aus Kunststoff gefertigt oder als Fortsatz des Dachrahmens 54 direkt an diesen angeformt sein. Das klammerartige Hakenelement 52 ist so ausgeformt, dass es in eine Richtung senkrecht zur Dachhaut 24 steif ist. Hakenelement 52 und Deckel 10 sind so relative zueinander angebracht, dass beim Verschieben des Deckels 10 (in x-Richtung) in Richtung einer Schließstellung eine Verriegelungsnase 12 des Deckels das Hakenelement auffängt und mit dem Hakenelement in Eingriff gelangt, sodass in der Schleißstellung des Deckels dieser gegen eine Verlagerung nach oben (in z-Richtung) gesichert ist. Diese Verriegelung geschieht bei der Ausführungsform der Fig. 5 ohne eine Bewegung des Hakenelements mittels einer eigenen Kinematik, sondern lediglich durch die Verformung des Hakenelements, welches zwar in z-Richtung steif, in x-Richtung aber flexibel und elastisch verformbar aufgeführt ist. Bei einer alternativen (nicht abgebildeten) Ausführungsform kann das Hakenelement auch in bestimmten Grenzen in z-Richtung verschiebbar ausgeführt sein. Dies ist insbesondere dann vorteilhaft, wenn der Deckel kurz vor Erreichen der Schließposition noch relativ weit unten steht, die Deckelkinematik also vor Erreichen der Endposition im wesentlichen eine z-Bewegung macht. Länge und Positionierung des Hakenelements der Fig. 5 sind so gewählt, dass es nach einer Verlagerung des den Befestigungsfortsätzen 56a, b entgegen gesetzten Endes in x-Richtung durch die Bewegung des Deckels ebenfalls in x-Richtung in dessen Verriegelungsnase 12 einhakt und bei der weiteren Verlagerung des Deckels unter Zugspannung (in z-Richtung) gebracht wird, sodass es den Deckel in dessen Bereich um die Verriegelungsnase gegen ein Abheben in z-Richtung in der Schließstellung festlegt. Die Verriegelungsnase 12 ist in eine Randumschäumung 20 des Deckels eingeformt. Bei einer Verlagerung des Deckels 10 von der Schleißstellung in eine geöffnete Position (entgegengesetzt zu x-Richtung) gibt die Verriegelungsnase 12 das Hakenelement wieder frei. Die Freigabe kann durch eine kombinierte Bewegung des Deckels in x- und z-Richtung erleichtert werden. In der Fig. 5 nur schematisch und schraffiert angedeutet ist eine Dichtung 32 an der Vorderkante des Dachausschnitts, welche im Bereich des Hakenelements eine Aussparung aufweist, in der das Hakenelement eingebettet ist. Aufgrund der geringen Dicke des Hakenelements 52 kann eine Aussparung auch unterbleiben und das Hakenelement verformt in der Schließstellung des Deckels 10 die Dichtung 32 lediglich geringfügig. Alternativ kann eine Dichtung auch an den Randbereichen des Deckels angebracht sein und auf eine Dichtung am Dachausschnitt verzichtet werden. In diesem Fall kann am Dachausschnitt zusätzlich ein Dämpfungselement wie z.B. ein Filz- oder Gummistreifen angebracht sein, um die Anlagerungsbewegung von dem Deckel zugeordneten Teilen an dachfeste Bereiche zu dämpfen.

### Bezugszeichenliste

- 10: Deckel
- 12a, b: Verriegelungsnase
- 14: Deckelvorderkante
- 16: Eckbereich
- 18: Glasscheibe
- 20: Randumschäumung
- 22: Verstärkungseinlage
- 23: Verstärkungselement
- 24: Dachhaut
- 26: senkrechter Abschnitt
- 28a, b: erste, zweite Krümmung
- 30: Falz
- 32: Dichtung
- 33: Abstand
- 34: Kröpfung
- 36: Fortsatz
- 38, 39: Klebeverbirzdungen
- 40: Stirnfläche
- 41: freies Ende
- 42: Klebeverbindung
- 43a, b: härterer / weicherer Bereich
- 44a, b: Nut
- 46: Anschrägung
- 48: Verstärkungseinlage
- 50: Schnur
- 52: Hakenelement
- 54: Dachrahmen
- 56a, b: Befestigungsfortsatz
- 58: Nase

## Patentansprüche

1. Fahrzeugdach mit einer innerhalb einer festen Dachaußenhaut eines Fahrzeugs angeordneten Dachöffnung und einem Deckel (10) zum wahlwciscn Verschließen und mindestens teilweisen Öffnen der Dachöffnung, wobei zum mindestens teilweisen Öffnen der Dachöffnung der Deckel aus einer Schließposition sowohl an seiner Hinterkante ausstellbar als auch in Fahrtrichtung nach hinten verlagerbar ist, wobei der Deckel im Bereich seiner Vorderkante (14) mindestens eine Verriegelungsnase (12a, 12b) aufweist, welche in einer Schließstellung des Deckels ein in einer Richtung senkrecht zur Dachaußenhaut steifes Abstützelement untergreift und der Deckel an seiner Hinterkante so ausgebildet ist, dass in der Schließstellung eine Untergreifung unter die benachbarten Bereiche der Dachöffnung unterbleibt, wobei
der Deckel an seiner Hinterkante nach oben ausstellbar ist, **dadurch gekennzeichnet, dass** das Abstützelement durch eine Vorderkante der Dachöffnung ausgebildet wird, wobei die Vorderkante durch einen Rand in der Außenhaut ausgebildet wird, und der Deckel eine transparente Scheibe (18) aufweist, wobei die Scheibe (18) eine Randumschäumung (20) aufweist und die Verriegelungsnase (12a, 12b) an die Randumschäumung (20) angeformt ist.

2. Fahrzeugdach nach Anspruch 1, **dadurch gekennzeichnet, dass** die Vorderkante der Dachöffnung eine Dichtung (32) aufweist, welche als Hohlkammerdichtung ausgebildet ist, wobei die Verriegelungsnase (12a, b) die Dichtung (32) in der Schließstellung mindestens teilweise untergreift.

3. Fahrzeugdach nach Anspruch 1 oder 2, **dadurch gekennzeichnet, dass** der Deckel (10) zur Verlagerung in Fahrzeuglängsrichtung absenkbar oder anhebbar gelagert ist.

4. Fahrzeugdach nach einem der vorhergehenden Ansprüche, **dadurch gekennzeichnet, dass** die Dichtung (32) einen härteren Bereich (43a) und einen weicheren Bereich (43b) aufweist und der härtere Bereich (43a) als Verstärkungseinlage (48) innerhalb des weicheren Bereichs ausgeführt ist.

5. Fahrzeugdach nach Anspruch 4, **dadurch gekennzeichnet, dass** der härtere Bereich (43a) als Schnur (50) ausgebildet ist, welche innerhalb der Hohlkammer angeordnet ist.

6. Fahrzeugdach nach einem der vorhergehenden Ansprüche, **dadurch gekennzeichnet, dass** in die Randumschäumung (20) eine Verstärkungseinlage (22) eingeschäumt ist und die Verstärkungseinlage (22) teilweise in die Verriegelungsnase (12) hinein ragt.

## Claims

1. Vehicle roof having a roof opening which is disposed within a fixed external roof skin of a vehicle and a cover (10) for selectively closing and at least partially opening the roof opening, wherein for at least partially opening the roof opening the cover, from a closing position, is both tiltable at its rear edge as well as displaceable in a rearward manner in relation to the travel direction, wherein the cover in the region of its front edge (14) has at least one locking cam (12a, 12b) which in a closing position of the cover engages below a support element which is rigid in a perpendicular direction in relation to the external roof skin, and the cover at its rear edge is configured such that in the closing position engagement below the adjacent regions of the roof opening ceases, wherein the cover at its rear edge is tiltable in an upward manner, **characterized in that** the support element is configured by a front edge of the roof opening, wherein the front edge is configured by a periphery in the external skin, and the cover has a transparent panel (18) wherein the panel (18) has a foamed periphery (20) and the locking cam (12a, 12b) is moulded onto the foamed periphery (20).

2. Vehicle roof according to Claim 1, **characterized in that** the front edge of the roof opening has a seal (32) which is configured as a hollow-chamber seal, wherein the locking cam (12a, 12b) in the closing position at least partially engages below the seal (32).

3. Vehicle roof according to Claim 1 or 2, **characterized in that** the cover (10), in order to be displaced in the longitudinal direction of the vehicle, is mounted so as to be lowerable or raisable.

4. Vehicle roof according to one of the preceding claims, **characterized in that** the seal (32) has a comparatively hard region (43a) and a comparatively soft region (43b), and the comparatively hard region (43a) is implemented as a reinforcement insert (48) within the comparatively soft region.

5. Vehicle roof according to Claim 4, **characterized in that** the comparatively hard region (43a) is configured as a cord (50) which is disposed within the hollow chamber.

6. Vehicle roof according to one of the preceding claims, **characterized in that** a reinforcement insert (22) is embedded in the foamed periphery (20), and the reinforcement insert (22) partially projects into the locking cam (12).

## Revendications

1. Toit de véhicule, comprenant une ouverture de toit disposée à l'intérieur d'un panneau extérieur de toit fixe d'un véhicule et un couvercle (10) pour fermer et ouvrir au moins partiellement de manière sélective l'ouverture de toit, le couvercle pouvant, à partir d'une position de fermeture, être à la fois sorti au niveau de son arête arrière et déplacé vers l'arrière dans le sens de conduite, pour ouvrir au moins partiellement l'ouverture de toit, le couvercle comprenant au moins un ergot de verrouillage (12a, 12b) dans la région de son arête avant (14), lequel ergot de verrouillage vient en prise par le dessous avec un élément de support rigide dans une direction perpendiculaire au panneau extérieur de toit dans une position de fermeture du couvercle, et le couvercle étant réalisé au niveau de son arête arrière de telle sorte que, dans la position de fermeture, une entrée en prise par le dessous demeure en dessous des régions adjacentes de l'ouverture de toit, le couvercle pouvant être sorti vers le haut au niveau de son arête arrière, **caractérisé en ce que** l'élément de support est formé par une arête avant de l'ouverture de toit, l'arête avant étant formée par un bord dans le panneau extérieur, et le couvercle comprenant une vitre transparente (18), la vitre (18) comprenant une garniture en mousse de bord (20) et l'ergot de verrouillage (12a, 12b; étant formé sur la garniture en mousse de bord (20).

2. Toit de véhicule selon la revendication 1, **caractérisé en ce que** l'arête avant de l'ouverture de toit comprend un joint d'étanchéité (32), lequel est réalisé sous forme de joint d'étanchéité à chambre creuse, l'ergot de verrouillage (12a, b) venant en prise par le dessous au moins partiellement avec le joint d'étanchéité (32) dans la position de fermeture.

3. Toit de véhicule selon la revendication 1 ou 2, **caractérisé en ce que** le couvercle (10) est monté de manière à pouvoir être abaissé ou relevé dans la direction longitudinale du véhicule en vue du déplacement.

4. Toit de véhicule selon l'une quelconque des revendications précédentes, **caractérisé en ce que** le joint d'étanchéité (32) comprend une région plus dure (43a) et une région plus molle (43b) et la région plus dure (43a) est réalisée sous forme d'insert de renfort (48) à l'intérieur de la région plus molle.

5. Toit de véhicule selon la revendication 4, **caractérisé en ce que** la région plus dure (43a) est réalisée sous forme de cordon (50), lequel est disposé à l'intérieur de la chambre creuse.

6. Toit de véhicule selon l'une quelconque des revendications précédentes, **caractérisé en ce qu'**un insert de renfort (22) est enrobé de mousse dans la garniture en mousse de bord (20) et l'insert de renfort (22) pénètre partiellement dans l'ergot de verrouillage (12).
